# EUROPEAN PATENT SPECIFICATION

(11) **EP 2 544 178 B1**
(45) Date of publication and mention of the grant of the patent: **29.10.2014**
(21) Application number: 12175447.7
(22) Date of filing: 06.07.2012
(51) Int. Cl.: G10L 13/00, G10L 13/04

(54) **Mobile computing apparatus and method of reducing user workload in relation to operation of a mobile computing apparatus**
Mobile Computervorrichtung und Verfahren zur Verringerung der Benutzerarbeitsbelastung im Verhältnis zum Betrieb einer mobilen Berechnungsvorrichtung
Appareil de calcul mobile et procédé de réduction de la charge de travail utilisateur par rapport au fonctionnement d'un dispositif informatique mobile

(30) Priority: 06.07.2011 GB 201111499
(43) Date of publication of application: 09.01.2013
(73) Proprietor: TomTom International B.V., 1011 AC Amsterdam (NL)
(72) Inventor: Boschker, Breght Roderick, 1223 AT Hilversum (NL)
(74) Representative: Dobson, Adrian

(56) References cited:
- US-A1- 2009 298 474
- US-A1- 2011 136 548
- US-B1- 6 181 996

## Description

### Field of the Invention

The present invention relates to a mobile computing apparatus of the type that, for example, is capable of receiving textual content for conversion into audible speech. The present invention also relates to a method of reducing user workload in relation to operation of a mobile computing apparatus, the method being of the type that, for example, receives textual content for conversion to audible speech.

### Background to the Invention

Portable computing devices, for example Portable Navigation Devices (PNDs) that include GPS (Global Positioning System) signal reception and processing functionality are well known and are widely employed as in-car or other vehicle navigation systems.

In general terms, a modern PND comprises a processor, memory and map data stored within said memory. The processor and memory cooperate to provide an execution environment in which a software operating system is typically established, and additionally it is commonplace for one or more additional software programs to be provided to enable the functionality of the PND to be controlled, and to provide various other functions.

Typically, these devices further comprise one or more input interfaces that allow a user to interact with and control the device, and one or more output interfaces by means of which information may be relayed to the user. Illustrative examples of output interfaces include a visual display and a speaker for audible output. Illustrative examples of input interfaces include one or more physical buttons to control on/off operation or other features of the device (which buttons need not necessarily be on the device itself but can be on a steering wheel if the device is built into a vehicle), and a microphone for detecting user speech. In one particular arrangement, the output interface display may be configured as a touch sensitive display (by means of a touch sensitive overlay or otherwise) additionally to provide an input interface by means of which a user can operate the device by touch.

Devices of this type will also often include one or more physical connector interfaces by means of which power and optionally data signals can be transmitted to and received from the device, and optionally one or more wireless transmitters/receivers to allow communication over cellular telecommunications and other signal and data networks, for example Bluetooth, Wi-Fi, Wi-Max, GSM, UMTS and the like.

PNDs of this type also include a GPS antenna by means of which satellite-broadcast signals, including location data, can be received and subsequently processed to determine a current location of the device.

The PND may also include electronic gyroscopes and accelerometers which produce signals that can be processed to determine the current angular and linear acceleration, and in turn, and in conjunction with location information derived from the GPS signal, velocity and relative displacement of the device and thus the vehicle in which it is mounted. Typically, such features are most commonly provided in in-vehicle navigation systems, but may also be provided in PNDs if it is expedient to do so.

The utility of such PNDs is manifested primarily in their ability to determine a route between a first location (typically a start or current location) and a second location (typically a destination). These locations can be input by a user of the device, by any of a wide variety of different methods, for example by postcode, street name and house number, previously stored "well known" destinations (such as famous locations, municipal locations (such as sports grounds or swimming baths) or other points of interest), and favourite or recently visited destinations.

Typically, the PND is enabled by software for computing a "best" or "optimum" route between the start and destination address locations from the map data. A "best" or "optimum" route is determined on the basis of predetermined criteria and need not necessarily be the fastest or shortest route. The selection of the route along which to guide the driver can be very sophisticated, and the selected route may take into account existing, predicted and dynamically and/or wirelessly received traffic and road information, historical information about road speeds, and the driver's own preferences for the factors determining road choice (for example the driver may specify that the route should not include motorways or toll roads).

The device may continually monitor road and traffic conditions, and offer to or choose to change the route over which the remainder of the journey is to be made due to changed conditions. Real time traffic monitoring systems, based on various technologies (e.g. mobile phone data exchanges, fixed cameras, GPS fleet tracking), are being used to identify traffic delays and to feed the information into notification systems.

PNDs of this type may typically be mounted on the dashboard or windscreen of a vehicle, but may also be formed as part of an on-board computer of the vehicle radio or indeed as part of the control system of the vehicle itself. The navigation device may also be part of a hand-held system, such as a PDA (Portable Digital Assistant), a media player, a mobile telephone or the like, and in these cases, the normal functionality of the hand-held system is extended by means of the installation of software on the device to perform both route calculation and navigation along a calculated route.

Once a route has been calculated by a PND, the user interacts with the navigation device to select the desired calculated route, optionally from a list of proposed routes. Optionally, the user may intervene in, or guide the route selection process, for example by specifying that certain routes, roads, locations or criteria are to be avoided or are mandatory for a particular journey. The route calculation aspect of the PND forms one primary function, and navigation along such a route is another primary function.

A further important function provided by the device is automatic route re-calculation in the event that: a user deviates from the previously calculated route during navigation (either by accident or intentionally); real-time traffic conditions dictate that an alternative route would be more expedient and the device is suitably enabled to recognize such conditions automatically, or if a user actively causes the device to perform route re-calculation for any reason.

As mentioned above, it is also known to allow a route to be calculated with user defined criteria; for example, the user may prefer a scenic route to be calculated by the device, or may wish to avoid any roads on which traffic congestion is likely, expected or currently prevailing. The device software would then calculate various routes and weigh more favourably those that include along their route the highest number of points of interest (known as POIs), which are examples of geographic features, tagged as being for example of scenic beauty, or, using stored information indicative of prevailing traffic conditions on particular roads, order the calculated routes in terms of a level of likely congestion or delay on account thereof. Other POI-based and traffic information-based route calculation and navigation criteria are also possible.

Although the route calculation and navigation functions are fundamental to the overall utility of PNDs, it is possible to use the device purely for information display, or "free-driving", in which only map information relevant to the current device location is displayed, and in which no route has been calculated and no navigation is currently being performed by the device. Such a mode of operation is often applicable when the user already knows the route along which it is desired to travel and does not require navigation assistance.

During navigation along a calculated route, it is usual for such PNDs to provide visual and/or audible instructions to guide the user along a chosen route to the end of that route, i.e. the desired destination. It is also usual for PNDs to display map information on-screen during the navigation, such information regularly being updated on-screen so that the map information displayed is representative of the current location of the device, and thus of the user or user's vehicle if the device is being used for in-vehicle navigation.

An icon displayed on-screen typically denotes the current device location, and is centred with the map information of current and surrounding roads in the vicinity of the current device location and other map features also being displayed. Additionally, navigation information may be displayed, optionally in a status bar above, below or to one side of the displayed map information, examples of navigation information include a distance to the next deviation from the current road required to be taken by the user, the nature of that deviation possibly being represented by a further icon suggestive of the particular type of deviation, for example a left or right turn. The navigation function also determines the content, duration and timing of audible instructions by means of which the user can be guided along the route. As can be appreciated, a simple instruction such as "turn left in 100 m" requires significant processing and analysis. As previously mentioned, user interaction with the device may be by a touch screen, or additionally or alternately by steering column mounted remote control, by voice activation or by any other suitable method.

Devices of the type described above, for example the GO 940 LIVE model manufactured and supplied by TomTom International B.V., provide a reliable means for enabling users to navigate from one position to another. Such devices are of great utility when the user is not familiar with the route to the destination to which they are navigating.

An increasing trend in relation to electronic apparatus, particularly electronic equipment with data connectivity capabilities, is to broaden their functionality by providing the apparatus with a capability to support the execution of widgets or so-called "apps". Such "bolt-on" subsidiary or non-core applications enable the functionality of the electronic apparatus, for example a navigation apparatus, to be extended to perform other functions desired by a user. For example, in the non-exclusive context of the navigation apparatus, the functionality of the navigation apparatus can be extended to support the communication of e-mail or Short Messaging Service (SMS) or "text" messages.

With this increase in functionality, a driver using the navigation apparatus is subjected to additional potential distractions by virtue of receipt of audible and/or visual alerts indicating receipt of a message. The driver then has the optional burden of reading the message received. Such distractions are known as "workload". In order to minimise the workload of the driver, it is known to provide electronic apparatus like the navigation apparatus with so-called Text-To-Speech (TTS) engines.

Typically, a TTS engine is capable of decoding or interpreting a simple text or word-processor originated document (for example a ".txt" and/or a ".doc" file) and converting what is essentially a binary representation of the text into an alternate binary representation in the form of instructions to a sound processor, which ultimately delivers the appropriate electric signals to a conventional loudspeaker. The interpretation of the original text document, regardless of whether this is discrete in that it only contains a short phrase or name, or whether it is more expansive and contains one or more paragraphs of text, can typically involve analysis at a granular level, for example consonants, vowels and syllables, and can also include grammar, contextual and/or punctuation analysis such that the resulting synthetic speech is produced with the correct inflections and intonations and thus sounds as realistic as possible.

In general, there are two methods of synthesizing speech using electronic hardware and software. In concatenative synthesis, synthesized speech is created by concatenating pieces of pre-recorded speech that are stored in a database. Systems differ in the size of the stored speech units; a system that stores only smaller phones or diphones will provide the largest output range, but may lack clarity whereas the storage of entire words or sentences allows for high-quality output. Alternatively in formant synthesis, a synthesizer incorporates a model of the vocal tract and other human voice characteristics to create a completely "synthetic" voice output. Parameters such as fundamental frequency, voicing, and noise levels are varied over time to create a waveform of artificial speech. This method is sometimes called rules-based synthesis; however, many concatenative systems also have rules-based components.

One of the most common usages of speech synthesis since its inception has been to allow blind or partially sighted people to comprehend the written word. More recently, a plethora of modern devices, indeed even devices with relatively modest processing power and memory such as Personal Digital Assistants (PDAs), more advanced mobile phones such as so-called smart-phones, games consoles, and in-car satellite navigation systems, as mentioned above, allow some facility for either playing pre-recorded snippets of human voices, or executing TTS software for interpreting any text or word-processed document instantly stored on the device.

However, the use of TTS in an in-vehicle environment nevertheless still leaves the driver with a workload due to the distracting effect of the output of audible messages. In this respect, the TTS functionality of a navigation apparatus, if set to translate written text to audible speech, begins to recite the content of a received message upon receipt thereof. This unplanned and sometimes unwanted audible delivery serves as another burden on the concentration of the driver.

A further example for controlling a vehicle information system user interface depending upon the cognitive workload on the driver of a vehicle is disclosed in the patent document US 6181996 B1.

### Summary of the Invention

According to a first aspect of the present invention as claimed in claim 1, there is provided a mobile computing apparatus comprising: a processing resource arranged to support, when in use, an operational environment, the operational environment supporting receipt of textual content and: a workload estimator arranged to estimate a cognitive workload for a user; and a text-to-speech engine; wherein the text-to-speech engine is arranged to translate at least part of the received textual content to a signal reproducible as audible speech in accordance with a predetermined relationship between the amount of the textual content to be translated and a cognitive workload level in a range of cognitive workload levels, the range of cognitive workload levels comprising at least one cognitive workload level between end values.

The operational environment may be arranged to support: a predetermined primary application arranged to receive a message containing the textual content; a message data module arranged to receive the message to be communicated audibly; wherein the message data module may be arranged to select a part of the message in response to the cognitive workload estimated; and the message data module may also be arranged to communicate the part of the message selected to the text-to-speech engine.

The operational environment may be arranged to support: a predetermined primary application; user installation of a secondary non-core application that is capable of receiving a message containing textual content; a message data module arranged to receive the message to be communicated audibly; wherein the message data module is arranged to select a part of the message in response to the cognitive workload estimated; and the message data module is also arranged to communicate the part of the message selected to the text-to-speech engine.

The apparatus may further comprise: an input operably coupled to the workload estimator in order to receive a criterion to be used in order to calculate the cognitive workload of the user. The criterion may be a criterion external to the apparatus. The criterion may be the speed of a vehicle. The speed of the vehicle may be the speed of the vehicle in which the apparatus is disposed.

The criterion may be weather. The criterion may be an estimate of a physiological state of the user. The criterion may be a profile of the user. The criterion may be a familiarity rating of the user with respect to a geographic area.

The workload estimator may be arranged to determine the cognitive workload using the criterion and at least one more criterion as set forth above in relation to the first aspect of the invention.

The selected part of the textual content may comprise a proportion of the textual content thereof; the extent of the textual content selected may be dependent upon the degree of workload estimated.

The message may comprise machine-recognisable categories of content.

The message data module may be arranged to analyse the textual content and identify the categories of content in the message.

The message data module may be arranged to select a number of the categories of content in response to the cognitive workload estimated, and to communicate content from the number of categories of content selected from the message for communication to the text-to-speech engine.

The extent of the selection of the number of categories of content may depend upon the cognitive workload estimated.

The message may comprise a field associated with a category of content of the categories of content.

The message data module may be arranged to embed the message or a part thereof with markup language code. The markup language code may be Speech Synthesis Markup Language code.

The message may be an e-mail message. The message may be a messaging service message. The messaging service message may be a Short Messaging Service (SMS) message.

The secondary application may comprise the message data module.

According to a second aspect of the present invention, there is provided a navigation apparatus comprising the mobile computing apparatus as set forth above in relation to the first aspect of the invention.

According to a third aspect of the present invention as claimed in claim 14, there is provided a method of reducing user workload in relation to operation of a mobile computing apparatus that supports receipt of textual content, the method comprising: estimating a cognitive workload of a user; translating at least part of the received textual content to a signal reproducible as audible speech in accordance with a predetermined relationship between the amount of the textual content to be translated and a cognitive workload level in a range of cognitive workload levels, the range of cognitive workload levels comprising at least one cognitive workload level between end values.

According to a fourth aspect of the present invention, there is provided a computer program element comprising computer program code means to make a computer execute the method as set forth above in relation to the third aspect of the invention.

The computer program element may be embodied on a computer readable medium.

It is thus possible to provide an apparatus and method capable of determining a most appropriate manner in which to deliver the audible information. The instances of audible delivery of irrelevant content or simply delivery at an inappropriate time, for example spam e-mails or texts, by the apparatus is thus reduced. As a consequence, distraction of the user by information, potentially irrelevant or unimportant, is less frequent than in previous implementations of text-to-speech. Moreover, content is in general delivered in the safest possible way, preventing distraction of the user from the primary task of driving. This therefore reduces driver workload and so the attention of the user remains optional, thereby enhances driver safety.

Other advantages of these embodiments are set out hereafter, and further details and features of each of these embodiments are defined in the accompanying dependent claims and elsewhere in the following detailed description.

### Brief Description of the Drawings

At least one embodiment of the invention will now be described, by way of example only, with reference to the accompanying drawings, in which:
Figure 1 is a schematic illustration of an exemplary part of a Global Positioning System (GPS) usable by a navigation apparatus;
Figure 2 is a schematic diagram of electronic components of a navigation apparatus constituting an embodiment of the invention;
Figure 3 is a schematic diagram of a docking arrangement for optional use in a vehicle;
Figure 4 is a schematic representation of an architectural stack employed by the navigation apparatus of Figure 6;
Figure 5 is a schematic diagram of a navigation module of Figure 8 in greater detail;
Figure 6 is a schematic diagram of an audible instruction generation system comprising the navigation apparatus of Figure 6;
Figures 7 to 15 are screen shots of the navigation apparatus in relation to selection of a route associated with a proposed journey;
Figure 16 is a flow diagram of a method of delivering content constituting yet another embodiment of the invention;
Figure 17 shows the typical format in which e-mail data is received;
Figure 18 shows an exemplary e-mail message; and
Figure 19 shows how workload is used to determine the extent of the content of the e-mail message of Figure 18 that is to be converted to speech by a text-to-speech engine.

### Detailed Description of Preferred Embodiments

Throughout the following description identical reference numerals will be used to identify like parts.

Example embodiments of the present disclosure may be described with particular reference to a navigation device (ND) or personal navigation device (PND). It should be remembered, however, that the teachings of the present disclosure are not limited to NDs or PNDs, but are instead universally applicable to any type of processing device that is configured to execute text-to-speech software, for example but not exclusively processing devices configured to execute navigation software so as to provide route planning and navigation functionality. It also follows, therefore, that in the context of the present application, a navigation device is intended to include (without limitation) any type of route planning and navigation device, irrespective of whether that device is embodied as a PND, a navigation device built into a vehicle, or a computing resource (such as a desktop or portable personal computer (PC), mobile telephone or portable digital assistant (PDA)) executing route planning and navigation software. In this respect, it will be readily appreciated by the skilled reader that the application of the invention may be of far wider scope, and should not be considered limited by the embodiments specifically described herein.

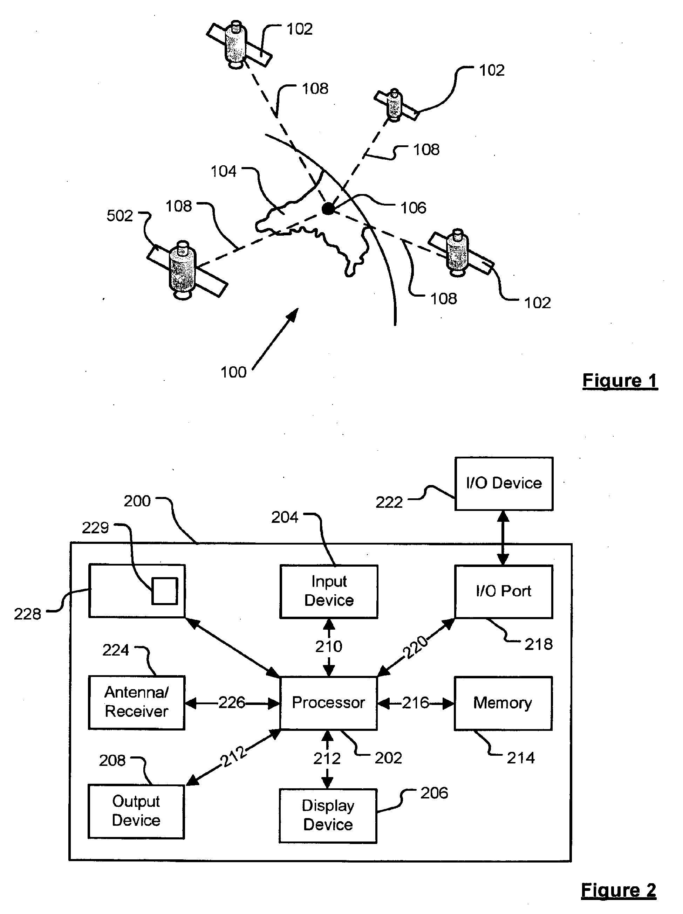

With the above provisos in mind, a Global Positioning System (GPS) of Figure 1 and the like are used for a variety of purposes. In general, the GPS is a satellite-radio based navigation system capable of determining continuous position, velocity, time, and in some instances direction information for an unlimited number of users. Formerly known as NAVSTAR, the GPS incorporates a plurality of satellites which orbit the earth in extremely precise orbits. Based on these precise orbits, GPS satellites can relay their location to any number of receiving units.

The GPS system is implemented when a device, specially equipped to receive GPS data, begins scanning radio frequencies for GPS satellite signals. Upon receiving a radio signal from a GPS satellite, the device determines the precise location of that satellite via one of a plurality of different conventional methods. The device will continue scanning, in most instances, for signals until it has acquired at least three different satellite signals (noting that position is not normally, but can be, determined with only two signals using other triangulation techniques). Implementing geometric triangulation, the receiver uses the three known positions to determine its own two-dimensional position relative to the satellites. This can be done in a known manner. Additionally, acquiring a fourth satellite signal allows the receiving device to calculate its three dimensional position by the same geometrical calculation in a known manner. The position and velocity data can be updated in real time on a continuous basis by an unlimited number of users.

As shown in Figure 1, the GPS system 100 comprises a plurality of satellites 102 orbiting the earth 104. A GPS receiver 106 receives spread spectrum GPS satellite data signals 108 from a number of the plurality of satellites 102. The spread spectrum data signals 108 are continuously transmitted from each satellite 102, the spread spectrum data signals 108 transmitted each comprise a data stream including information identifying a particular satellite 102 from which the data stream originates. As mentioned above, the GPS receiver 106 generally requires spread spectrum data signals 108 from at least three satellites 102 in order to be able to calculate a two-dimensional position. Receipt of a fourth spread spectrum data signal enables the GPS receiver 106 to calculate, using a known technique, a three-dimensional position.

Referring to Figure 2, it should be noted that the block diagram of the navigation apparatus 200 is not inclusive of all components of the navigation apparatus, but is only representative of many example components. The navigation apparatus 200 is located within a housing (not shown). The navigation apparatus 200 includes a processing resource, for example a processor 202, the processor 202 being coupled to an input device 204 and a display device, for example a display screen 206. Although reference is made here to the input device 204 in the singular, the skilled person should appreciate that the input device 204 represents any number of input devices, including a keyboard device, voice input device, touch panel and/or any other known input device utilised to input information. Likewise, the display screen 206 can include any type of display screen such as a Liquid Crystal Display (LCD), for example.

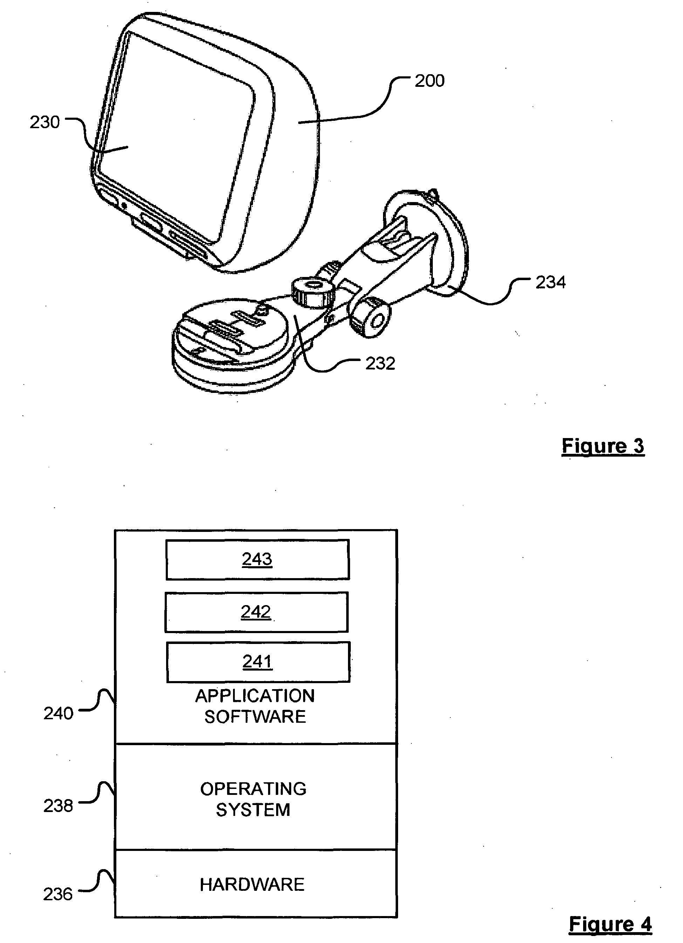

In one arrangement, one aspect of the input device 204, the touch panel, and the display screen 206 are integrated so as to provide an integrated input and display device, including a touchpad or touchscreen input 230 (Figure 3) to enable both input of information (via direct input, menu selection, etc.) and display of information through the touch panel screen so that a user need only touch a portion of the display screen 206 to select one of a plurality of display choices or to activate one of a plurality of virtual or "soft" buttons. In this respect, the processor 202 supports a Graphical User Interface (GUI) that operates in conjunction with the touchscreen.

In the navigation apparatus 200, the processor 202 is operatively connected to and capable of receiving input information from input device 204 via a connection 210, and operatively connected to at least one of the display screen 206 and an output device 208, via respective output connections 212, to output information thereto. The output device 208 is, for example, an audible output device (e.g. including a loudspeaker). As the output device 208 can produce audible information for a user of the navigation apparatus 200, it should equally be understood that input device 204 can include a microphone and software for receiving input voice commands as well. Further, the navigation apparatus 200 can also include any additional input device 204 and/or any additional output device, such as audio input/output devices. The processor 202 is operably coupled to a memory resource 214 via connection 216 and is further adapted to receive/send information from/to input/output (I/O) ports 218 via connection 220, wherein the I/O port 218 is connectible to an I/O device 222 external to the navigation apparatus 200. The external I/O device 222 may include, but is not limited to an external listening device, such as an earpiece for example. The connection to I/O device 222 can further be a wired or wireless connection to any other external device such as a car stereo unit for hands-free operation and/or for voice activated operation for example, for connection to an earpiece or headphones. The memory resource 214 comprises, for example, a volatile memory, such as a Random Access Memory (RAM) and a non-volatile memory, for example a digital memory, such as a flash memory.

Figure 2 further illustrates an operative connection between the processor 202 and an antenna/receiver 224 via connection 226, wherein the antenna/receiver 224 can be a GPS antenna/receiver for example. It should be understood that the antenna and receiver designated by reference numeral 224 are combined schematically for illustration, but that the antenna and receiver may be separately located components, and that the antenna can be a GPS patch antenna or helical antenna for example.

In order to support communications in a Universal Mobile Telecommunications System (UMTS), the processor 202 is also coupled to a cellular communications module 228 constituting the mobile telephone technology. The cellular communications module 228 supports a communications interface 229 for transmitting and receiving data wirelessly. The cellular communications module 228 comprises a Subscriber Identity Module (SIM) (not shown) coupled thereto having a data subscription associated therewith. The subscription is, in this example, for a limited data usage over a pre-determined period of time, for example a calendar month. In other embodiments, the subscription need not have a data usage limit. The cellular communications module 228 supports a bidirectional data communications service, for example a packet switched data service, such as a General Packet Radio Service (GPRS) supported by the GSM communications network and/or a High Speed Downlink Packet Access (HSDPA) service supported by the UMTS network. The communications interface 229 is therefore compatible with the bidirectional data communications service. The bidirectional data communications service supports an Internet Protocol (IP) for data communications although use of other protocols, additionally or alternatively, is contemplated.

In this example, the navigation apparatus 200 comprises the cellular communications module 228. However, in another embodiment, a data session can be established, if required, with the communications network via a separate wireless communications terminal (not shown), such as a mobile telephone, PDA, and/or any device with mobile telephone technology, in order to establish a digital connection, for example a digital connection via known Bluetooth technology. In this respect, the navigation apparatus 200 can be Bluetooth enabled in order that the navigation apparatus 200 can be agnostic to the settings of the wireless communications terminal, thereby enabling the navigation apparatus 200 to operate correctly with the ever changing range of mobile telephone models, manufacturers, etc. Model/manufacturer specific settings can, for example, be stored by the navigation apparatus 200, if desired. The data stored for this information can be updated. It should therefore be understood that the navigation apparatus is an example of a communications-enabled mobile computing apparatus.

It will, of course, be understood by one of ordinary skill in the art that the electronic components shown in Figure 2 are powered by one or more power sources (not shown) in a conventional manner. As will be understood by one of ordinary skill in the art, different configurations of the components shown in Figure 2 are contemplated. For example, the components shown in Figure 2 can be in communication with one another via wired and/or wireless connections and the like. Thus, the navigation apparatus 200 described herein can be a portable or handheld navigation apparatus.

To facilitate use thereof, the portable or handheld navigation apparatus 200 of Figure 2 can be connected or "docked" (Figure 3) in a known manner in an automobile, or any other suitable vehicle, for example to a bicycle, a motorbike or a boat. The navigation apparatus 200 is then removable from the docked location for portable or handheld navigation use.

The navigation apparatus 200 can sit on an arm 232, which itself can be secured to a vehicle dashboard/window/etc. using a suction cup 234. This arm 232 is one example of a docking station to which the navigation apparatus 200 can be docked. The navigation apparatus 200 can be docked or otherwise connected to the arm 232 of the docking station by snap connecting the navigation apparatus 200 to the arm 232 for example. The navigation apparatus 200 may then be rotatable on the arm 232. To release the connection between the navigation apparatus 200 and the docking station, a button (not shown) on the navigation apparatus 200 may be pressed, for example. Other equally suitable arrangements for coupling and decoupling the navigation apparatus 200 to a docking station are well known to persons of ordinary skill in the art.

Turning to Figure 4, the memory resource 214 of the navigation apparatus 200 stores a boot loader program (not shown) that is executed by the processor 202 in order to load an operating system 238 from the memory resource 214 for execution by functional hardware components 236, which provides an environment in which application software 240 can run. The operating system 238 serves to control the functional hardware components 236 and resides between the application software 240 and the functional hardware components 236. The application software 240 provides an operational environment including the GUI that supports core functions of the navigation apparatus 200, for example map viewing, route planning, navigation functions and any other functions associated therewith. Such applications constitute predetermined primary applications. In this example, in order to implement advanced text-to-speech processing, the application software 240 also supports a communications module 241, for example an e-mail application that constitutes a secondary application that can be installed by the user. Of course, the skilled person will appreciate that other secondary applications are contemplated for download and installation by the user, for example messaging service applications, games, and/or utilities. Such non-core applications are applications ("apps") or widgets that do not relate to the primary function of the apparatus supporting the secondary application. The operational environment also supports a text-to-speech engine 242 and a cognitive workload estimator 243.

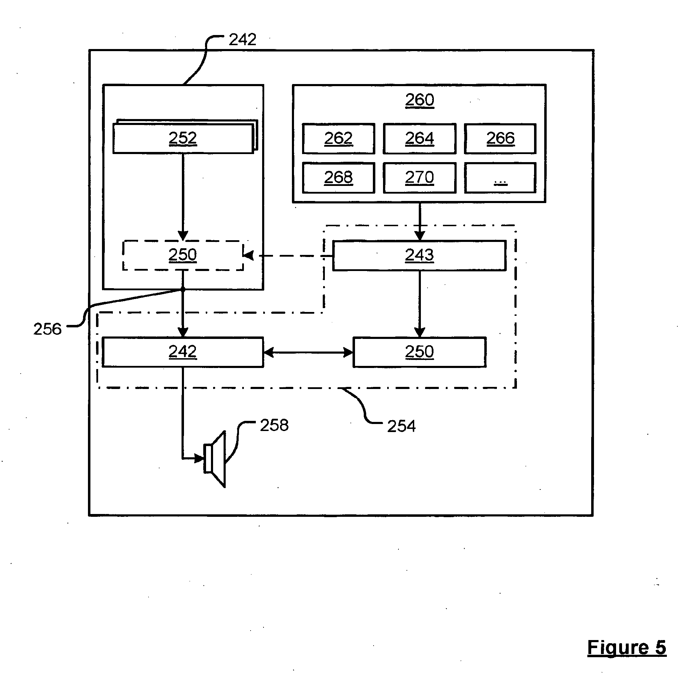

Referring to Figure 5, as mentioned above, the operational environment supports the secondary application 241, the text-to-speech engine 242 and the cognitive workload estimator or calculator 243. In this respect, the cognitive workload estimator 243 is operably coupled to the secondary application 241 and a message data module 250. The secondary application 241 also stores content received. In this example, the content received is e-mail data 252 constituting e-mails, because the secondary application 241 is an e-mail application.

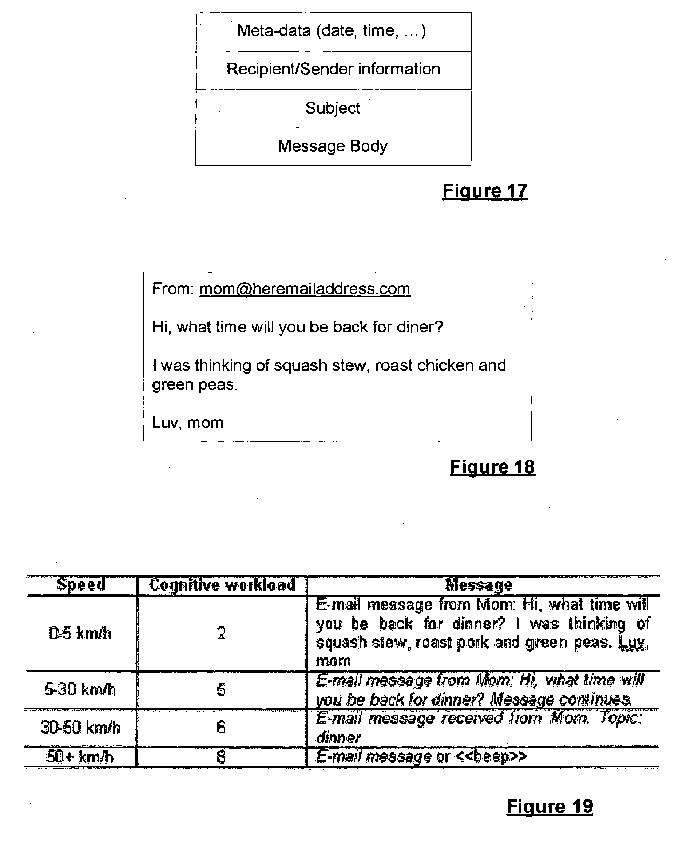

Briefly referring to Figure 17, the e-mail data received is formatted in accordance with a suitable communications standard pertaining e-mail communication, for example Requests For Comments (RFC) 822. The number of fields comprise meta-data fields for storing information concerning the e-mail, for example the date and/or time an e-mail is sent. The number of fields also comprise fields to store a sender information field, a recipient information field, a subject field, and a message body field.

In this example, the message data module 250 is also directly supported by the operational environment as part of a text-to-speech support module 254. However, in another embodiment, the message data module 250 can be supported by the secondary application 241, which can be advantageous, because the message data module 250 can be configured by the author of the secondary application in order to provide specific support for the textual content that the secondary application 241 is intended to receive for audible output. In this respect, the message data module 250 is written with, for example, knowledge of the data structure of the content to be received by the secondary application 241. In such an embodiment, knowledge of the structure of the content to be communicated can help in the division of the content into parts that are respectively appropriate for different cognitive workload levels. The message data module 250 is capable of accessing the e-mail data 252 and is also operably coupled to the text-to-speech engine 242. However, in this embodiment, the message data module 250 is configured to recognise e-mail content and so the secondary application 241 provides access to the e-mail data 252 via an output interface 256.

The output interface 256 of the secondary application 241 is also operably coupled to the text-to-speech engine 242, the text-to-speech engine 242 being operably coupled to a loudspeaker 258.

The cognitive workload estimator 243 is operably coupled to a set of inputs 260 that provide information that the cognitive workload estimator 243 can use in order to estimate the cognitive workload. In this respect, the inputs are derived from information that is either received from a remote source, for example via a communications network, or from sensors, for example sensors of a vehicle. In this example, the inputs include a speed data input 262, a weather data input 264, a driver state data input 266, a driver locality familiarity data input 268, and a traffic data input 270. Of course, the skilled person will readily appreciate that other inputs from sources external to the navigation apparatus 200 or concerning the environment external to the navigation apparatus 200 can be employed to provide further data inputs for the cognitive workload estimators 243.

The speed data input 262 obtains speed information, for example from a speed sensor of the vehicle, an output from a speed determination module of the vehicle, or from an internal speed calculation module (not shown) of the navigation apparatus 200. The weather data input 264 is arranged to provide weather data obtained from a remote source of weather information, for example via the communications network. The driver state data input 266 is arranged to provide information concerning the physiological state of a driver, for example an indication that the driver is very alert or drowsy. Such information can be generated by the on-boards systems of the vehicle using sensors in the vehicles to monitor the driver. The driver locality familiarity data input 268 is arranged to provide information concerning the calculated familiarity of the driver with a geographic area in which the vehicle is located. Such information can be generated in a known manner, for example as described in International patent publication number WO 2010/040385. The traffic data input 270 is arranged to provide information concerning any traffic in which the vehicle finds itself. Such traffic information can be obtained via the communications network from a remote server providing traffic, and optionally other, information. In relation to traffic information, due to the increasing use of communications networks by navigation apparatus, it is possible to identify immediately a traffic situation, for example using the HD Traffic information system available from TomTom International B.V. This information can then be used by the cognitive workload estimator 243, for example if communicated as a traffic rating via the traffic data input 270.

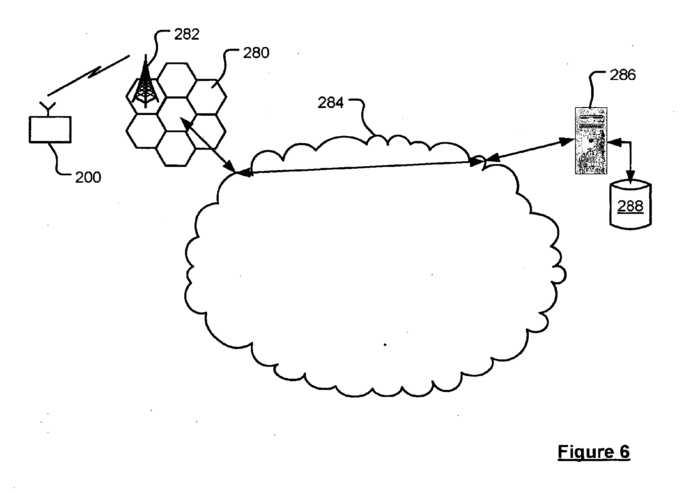

In this respect, and turning to Figure 6, the navigation apparatus 200 is capable of communicating with a cellular communications network 280, for example the UMTS network mentioned above, via one or more Node Bs 282 thereof. Whilst reference herein is made to the UMTS network, the skilled person should appreciate that the embodiments described herein are not limited to the UMTS network and use of other wireless communications networks is contemplated.

The cellular communications network 280 is operably coupled to the Internet 284. A remote server 286 is "attached" to the Internet 284 via an Internet Service Provider (ISP) and constitutes an example of an external resource. The remote server 286 comprises or is coupled to a database of traffic data 288 and/or a database of weather data (not shown).

As explained above, the establishment of the network connection between the navigation apparatus 200 (via a service provider) and another device, for example the remote server 286, using the Internet 284, can be done in any suitable known manner. In this respect, any number of appropriate data communications protocols can be employed. Furthermore, the communications module 228 can utilize any number of communication standards such as CDMA2000, GSM, IEEE 802.11 a/b/c/g/n, etc.

In operation, it is assumed, for the sake of ease of illustration, that the user, a visitor to the offices of the European Patent Office in The Hague, located at Patentlaan 2, Rijswijk, requires navigation assistance to the offices of TomTom International BV located at Rembrandtplein 35, Amsterdam.

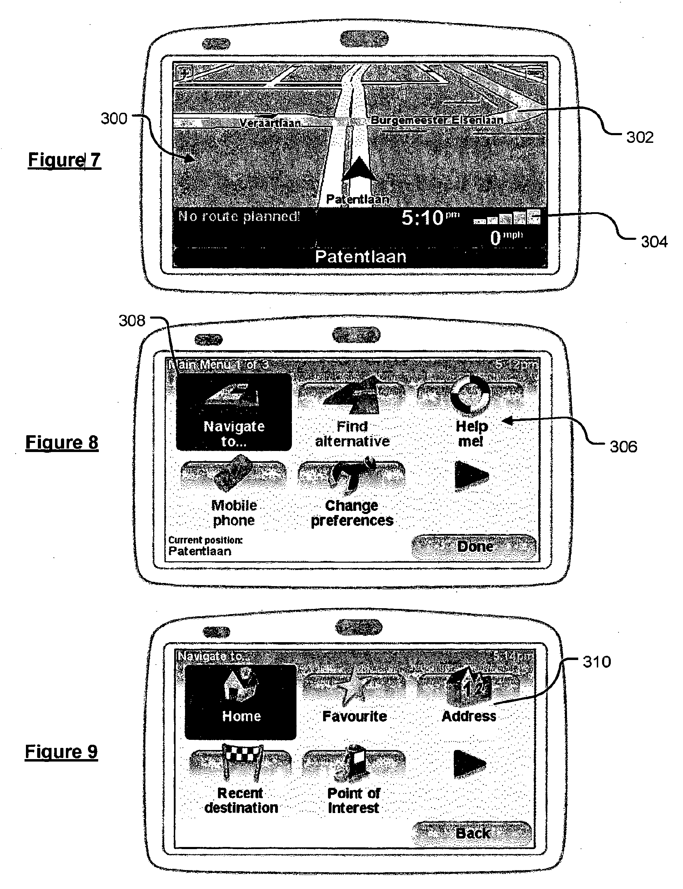

In order to implement navigation to the above destination using the navigation apparatus 200, the user configures a route for calculation as follows. Referring to Figures 7 to 15, the user undertakes an illustrative destination location input process described hereinbelow using a location browser function supported by the user interface. Although not shown, the user uses a settings menu option supported by the application software 240 in order to select view generation in a three-dimensional mode.

When the user powers-up the navigation apparatus 200, the GPS module 658 of the apparatus 200 acquires GPS data and performs a self-location determination by calculating (in a known manner) the current location of the navigation apparatus 200. The user is then presented, as shown in Figure 7, with a display 300 showing in pseudo three-dimensions: a local environment 302 in which the navigation apparatus 200 is determined to be located and, in a region 304 of the display 300 below the local environment 302, a set of control and status messages.

By touching the display at the local environment 302, the navigation apparatus 200, through the user interface, updates the display 300 by displaying (as shown in Figure 8) a series of virtual or soft buttons 306 by means of which the user can, inter alia, input a destination to which the user wishes to navigate.

By touching the "Navigate to" virtual button 308, the navigation apparatus 200 initiates a route calculation procedure, a part of which comprises a route creation procedure. In accordance with the route creation procedure, the navigation apparatus 200 displays (as shown in Figure 9) a plurality of virtual buttons that are each associated with a different category of selectable destinations. In this instance, the display shows a "home" button that if pressed would set the destination to a stored home location. The "favourite" button, if pressed, reveals a list of destinations that the user has previously stored in the navigation apparatus 200 and if one of these destinations is then selected the destination for the route to be calculated is set to the selected previously stored destination. The "Recent destination" soft button, if pressed, reveals a list of selectable destinations held in the memory of the navigation apparatus 200 and to which the user has recently navigated. Selection of one of the destinations populating this list would set the destination location for this route to the selected (previously visited) location. The "point of interest" button, if pressed, reveals a number of options by means of which a user can opt to navigate to any of a plurality of locations, such as Automatic Teller Machines (ATMs), petrol stations or tourist attractions for example, that have been pre-stored in the navigation apparatus 200 as locations to which a user of the navigation apparatus 200 might want to navigate to. A triangular arrow-like virtual button provides access to additional sub-menu options relating to the "Navigate to ..." menu option, and an "address" button 310 commences a process by which the user can input the street address of the destination to which the user wishes to navigate.

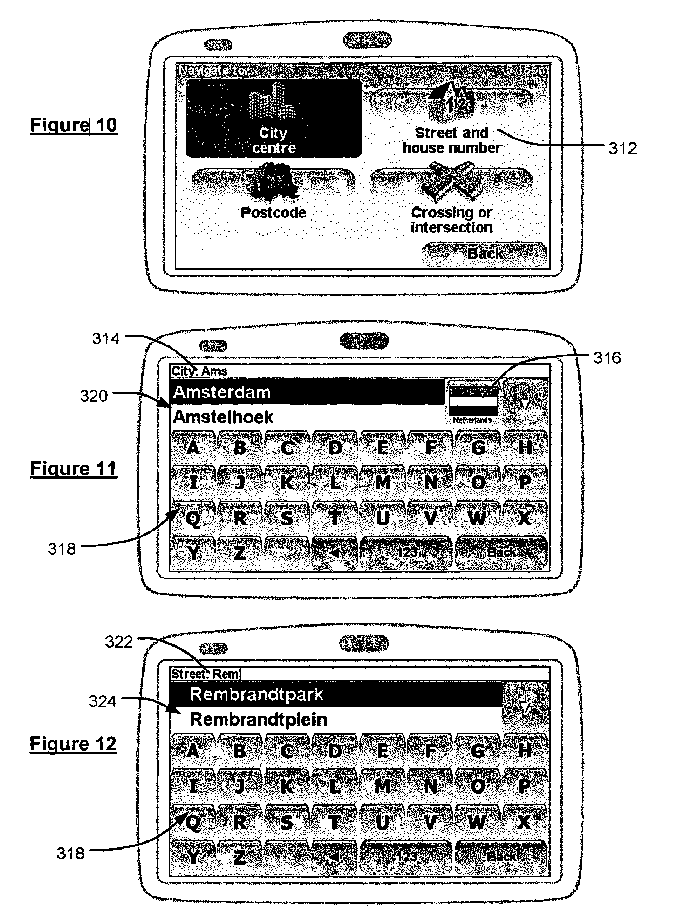

Since the user, in this example, knows the street address of the destination to which the user wishes the navigation apparatus 200 to navigate, it is assumed that the "address" button 310 is operated (by touching the virtual button displayed on the touchscreen) in order to select a location as the destination, whereupon (as shown in Figure 10) the user is presented with a series of address input options: address input by "city centre", by "postcode", by "crossing or intersection" (for example a junction of two roads) and by "street and house number".

In this example, the user knows the street address and house number of the destination and hence selects a "street and house number" virtual button 312 whereupon the user is then presented, as shown in Figure 11, with: a prompt 314 to enter the name of the city to which they wish to navigate, a flag button 316 by means of which the user can select the country in which the desired city is located, and a virtual keyboard 318 that may be operated by the user, if necessary, to input the name of the destination city. In this instance the user begins to type the word "Amsterdam" and the navigation apparatus 200 therefore responds by providing the user with a list 320 of selectable cites.

The user in this instance wishes to navigate to Amsterdam, and on selection of Amsterdam from the list 320 the navigation apparatus 200 displays, as shown in Figure 12, a prompt 322 for entry of a street name as well as the virtual keyboard 318 again by means of which the user can input street names. In this instance, the user begins to type the name of the street in which the destination is located and the navigation apparatus 200 responds by providing the user with a list 324 of selectable street names.

In this example, the user wishes to travel to the street "Rembrandtplein" and so the user selects "Rembrandtplein" from the displayed list 324.

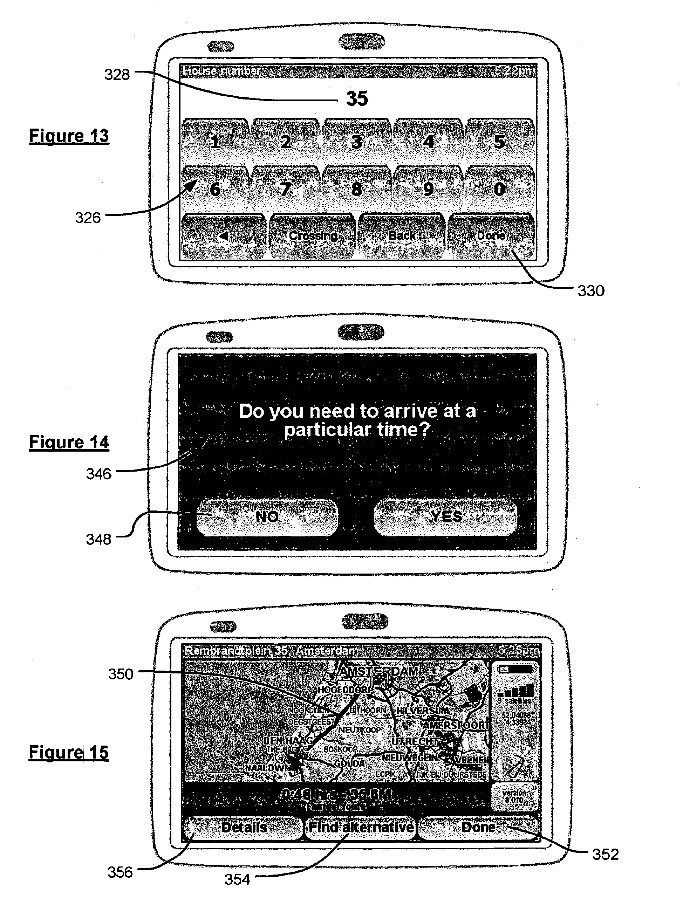

Once a street has been selected, the navigation apparatus 200 then displays (Figure 13) a restricted, largely numeric, virtual keypad 326 and prompts the user, by means of prompt 328, to enter the street number in the selected street and city to which the user wishes to navigate. If the user has previously navigated to a building number in this street, then that number is initially shown. If, as in this instance, the user wishes to navigate to No. 35, Rembrandtplein, then the user simply needs to type the street number ("35") using the virtual keypad 326 and then touch a "done" virtual button 330 displayed at the bottom right hand corner of the display 300. If the user should wish to navigate to a different building number in Rembrandtplein, then all the user needs do is operate the virtual keypad 326 to input an appropriate building or street number.

In the event that the user decides that navigation to the building number suggested is required, the user touches the "Done" virtual button 330. The application software 240 then causes the user interface to present an interrogation message 346 (Figure 14) asking the user whether a particular arrival time is required. If the user should touch a "yes" virtual button, then functionality is invoked that estimates the time required to travel to the destination (after provision by the user of the desired arrival time) and advises the user when they should leave (or if they are running late, should have left) their current location in order to arrive at their destination on time. In this instance, the user is not concerned about arriving at a particular time and hence selects a "no" virtual button 348.

Selecting the "no" virtual button 348 causes the route calculator 250 of the navigation module 242 to calculate, using the geospatial data stored in the map database 254, a route between the current location and the selected destination, and to display a route 350 calculated, as shown in Figure 15, on a relatively low magnification map that shows the entire route. The user is also provided with a "done" virtual button 352 which the user can press to indicate the calculated route is acceptable, a "find alternative" virtual button 354 that the user can press to cause the navigation apparatus 200 to calculate another route to the selected destination, and a "details" virtual button 356 that a user can press to reveal selectable options for the display of more detailed information concerning the currently displayed route 350.

In this instance, it is assumed that the user considers the displayed route acceptable, and once the "done" button 352 has been pressed the user is presented, with a three-dimensional view (not shown) of the current, start, location for the navigation apparatus 200. The user then commences their journey and the navigation apparatus 200 guides the user.

Prior to setting the route to be followed, it has been assumed that the user has set the navigation apparatus 200 to a text-to-speech mode via a settings menu option (not shown) of the user interface of the navigation apparatus 200. This enables the text-to-speech support module 254.

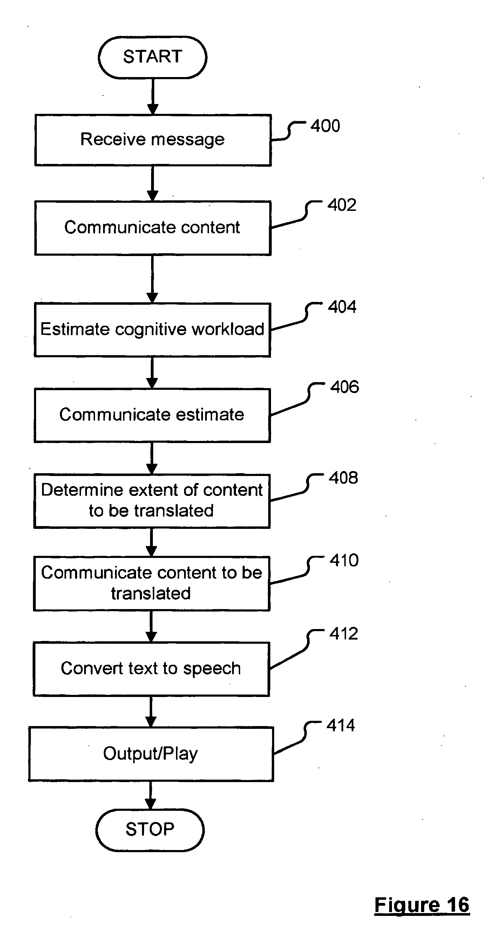

In this example, and referring to Figure 16, upon receipt (Step 400) of an e-mail message, the secondary application 241 communicates (Step 402) the content of the fields of the e-mail message received, for example the sender information field, the subject of the e-mail message field and the message body field. The fields are communicated to the text-to-speech engine 242.

In order to ensure that the workload of the driver is not increased to an unsafe level, the cognitive workload estimator 243 analyses one or more of the inputs 260 and estimates (Step 404) the cognitive workload of the driver.

In this respect, a cognitive workload level can be obtained in many ways based on calculating a rating using one or more scores received via the inputs 260 and/or in conjunction with a database or other data storage structure. The cognitive workload level indicates a level of cognitive workload to be output by the navigation device 200 to be placed on the user. For example, a cognitive workload level or 1 indicates that the navigation device 200 is placing little cognitive workload on the user, a cognitive workload level of 3 indicates a higher and moderate level of cognitive workload, whereas a cognitive workload level of 8 indicates an even higher cognitive workload.

The cognitive workload of the driver estimated is communicated (Step 406) to the message data module 250. The message data module 250 then executes a decision algorithm that determines (Step 408) how much of the original e-mail message should be converted to speech by the text-to-speech engine 242 in response to the magnitude or degree of workload. In this example, text-to-speech engine 242 provides the message data module 250 with information concerning the content received from the secondary application 241 and the message data module 250 executes a series of rules in order to determine which and how many of the fields of the e-mail message should be selected and hence how much of the content of the e-mail message should be converted to speech.

Once the extent of the content of the e-mail message is converted to speech, the content to be communicated (Step 410) audibly is passed to the text-to-speech engine 242 and the text-to-speech engine 242 responds to this by converting (Step 412) the textual content of the parts of the e-mail message selected by the message data module 250 into audible speech using one or more known techniques and output (Step 414) via the loudspeaker 258. As the specific technique employed to generate audible speech is not core to the teachings of the embodiments described herein, further discussion of the techniques will not be described further in order not to distract from the teachings of the present embodiment. In this example, it is desirable for the message data module 250 to augment or enrich the content communicated to the text-to-speech engine 242 with markup language code to assist the text-to-speech engine 242, for example speech synthesis markup language code.

The above example assumes that a combination of inputs 260 is used in order to calculate the cognitive workload and hence determine how much of the content of the received e-mail is converted to speech. However, it should be appreciated that a greater or less number of the inputs 260 can be used, for example a single input. In this respect, and for the sake of simplicity of description, this example will now consider the calculation of the driver cognitive workload based upon a single input, namely the speed data input 262.

In this respect, the cognitive workload estimator 243 implements a relatively simple algorithm in which the speed of the vehicle is received from the speed data input 262 and a rating between, for example, 1 and 10 is generated by the cognitive workload estimator 243 using a rules-based approach: speeds within a predetermined range are assigned a respective rating. The rating is received by the message data module 250 and used to select the at least part of the content of the e-mail message in response to the workload estimate. Indeed, it should also be appreciated that the speed of the vehicle without any further processing can be construed by the message data module 20 as a workload estimate in some circumstances.

In any event, referring to Figures 18 and, the workload calculated is used to determine the extent of the content of the e-mail message to be converted to speech by the text-to-speech engine 242.

In the example, the message of Figure 18 is received by the secondary application and the fields of content of the fields of the e-mail message communicated by the secondary application 241 to the text-to-speech engine 242. The cognitive workload estimator 243 obtains a speed at which the vehicle is travelling from the speed data input 262 and in response thereto the cognitive workload estimator 243 generates a cognitive workload estimate, in this example, in the form of a score. The cognitive workload score is communicated to the message data module 250, whereupon the message data module 250 analyses the fields available and determines, which of the fields should be selected for the text-to-speech conversion. In this example, the message data module 250 is capable of contextual analysis and so is able to generate content for a number of the workload levels. Consequently, if for example the vehicle is driving at 25 km/h, the text-to-speech engine 242 is instructed to generate audible content appropriate for the cognitive workload generated, namely, content identifying the sender, an excerpt of the body text content and an indication that further content exists. In other circumstances, when the cognitive workload is very high, the message data module 250 simply instructs the text-to-speech engine 242 simply to alert the user as to the existence on a received message, either by specific speech or a brief audible sound, such as a beep.

In the above example, the message data module 250 is configured to perform a greater level of analysis of the content of the e-mail message, or any other textual content if the textual content relates to something other than an e-mail message, in order to identify textual content to be converted to speech based upon the workload estimated. In this respect, the message data module 250 is configured to perform contextual analysis on the content of the e-mail message or other textual content in order to extract portions of the textual content for conversion to speech by the text-to-speech engine 242. Of course, as also indicated above, the contextual analysis functionality need not be provided. However, if implemented, the contextual analysis can be arranged to replace some content from the original message with other content that is synonymous with the original portion of content analysed. This may serve as a way of précising the content. In this respect, the definition of textual content should be understood to include such or similar operations performed in relation to original content, for example where textual content is inferred or otherwise determined, for example using a rules-based analysis procedure, in order to express the original textual content differently whilst retaining the original meaning. Consequently, such operations can be considered to constitute selection of at least part of the textual content.

The selective nature of conversion of the amount of textual content that is converted to speech by the text-to-speech engine 242 enables the driver to be exposed to an amount of additional workload that takes into account the current workload to which the driver is exposed, thereby avoiding exposing the driver to additional workload that increases the workload of the driver to an unacceptably high level.

Whilst, in the above examples, implementations have been described in the context of the message data module 250 being supported directly by the execution environment of the navigation apparatus 200, the skilled person should appreciate that the message data module 250 can be supported or be part of the secondary application 241 and therefore be customised for the purpose of the secondary application 241.

Additionally or alternatively, as intimated above, the navigation apparatus 200 can be capable of communicating with computing facilities of the vehicle, for example when the navigation apparatus 200 is integrated into the vehicle. In such an embodiment, the navigation apparatus 200 can access vehicle speed data, for example via a so-called CAN bus, or Flexray^{™} network.

By way of further example, whilst embodiments described in the foregoing detailed description refer to GPS, it should be noted that the navigation apparatus may utilise any kind of position sensing technology as an alternative to (or indeed in addition to) the GPS. For example the navigation apparatus may utilise other global navigation satellite systems (GNSS) such as the proposed European Galileo system when available. Equally, it is not limited to satellite based but could readily function using ground based beacons or any other kind of system that enables the device to determine its geographic location, for example the long range navigation (LORAN)-C system.

By way of yet another example, although the above embodiments have been described in the context of the navigation apparatus 200 providing route guidance during receipt of textual content, the skilled person should appreciate that the navigation apparatus 200 or any other computing apparatus need not necessarily be providing guidance in this way when operating in the manner described above in relation to text-to-speech conversion.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

It will also be well understood by persons of ordinary skill in the art that whilst the preferred embodiment implements certain functionality by means of software, that functionality could equally be implemented solely in hardware (for example by means of one or more ASICs (application specific integrated circuit)) or indeed by a mix of hardware and software. As such, the scope of the present invention should not be interpreted as being limited only to being implemented in software.

The scope of the present invention is defined by the appended claims.

## Claims

1. A mobile computing apparatus (200), comprising:
a processing resource (202) arranged to support, when in use, an operational environment, the operational environment supporting receipt of textual content;
a workload estimator (243) arranged to estimate a cognitive workload for a driver; and
a text-to-speech engine (242);
wherein the text-to-speech engine (242) is arranged to translate at least part of the received textual content to a signal reproducible as audible speech in accordance with a predetermined relationship between the amount of the textual content to be translated and a cognitive workload level in a range of cognitive workload levels, the range of cognitive workload levels comprising at least one cognitive workload level between end values.

2. An apparatus as claimed in claim 1, further comprising:
an input operably coupled to the workload estimator (243) in order to receive a criterion to be used in order to calculate the cognitive workload of the driver.

3. An apparatus as claimed in claim 2, wherein the criterion is at least one of: (i) the speed of a vehicle; (ii) weather; (iii) an estimate of a physiological state of the driver; (iv) a profile of the driver; and (v) a familiarity rating of the driver with respect to a geographic area.

4. An apparatus as claimed in any one of the preceding claims, wherein the selected part of the textual content comprises a proportion of the textual content thereof, the extent of the textual content selected being dependent upon the degree of workload estimated.

5. An apparatus as claimed in any one of the preceding claims, wherein the operational environment is arranged to support:
a predetermined primary application (240) arranged to receive a message containing the textual content; and
a message data module (250) arranged to receive the message to be communicated audibly; wherein:
the message data module (250) is arranged to select a part of the message in response to the cognitive workload estimated; and
the message data module (250) is also arranged to communicate the part of the message selected to the text-to-speech engine (242).

6. An apparatus as claimed in any one of claims 1 to 5, wherein the operational environment is arranged to support:
a predetermined primary application (240);
user installation of a secondary non-core application (241) that is capable of receiving a message containing textual content; and
a message data module (250) arranged to receive the message to be communicated audibly; wherein:
the message data module (250) is arranged to select a part of the message in response to the cognitive workload estimated; and
the message data module (250) is also arranged to communicate the part of the message selected to the text-to-speech engine (242).

7. An apparatus as claimed in any one of the preceding claims, wherein the message comprises machine-recognisable categories of content.

8. An apparatus as claimed in claim 7, wherein the message data module (250) is arranged to analyse the textual content and identify the categories of content in the message.

9. An apparatus as claimed in claim 7 or 8, wherein the message data module (250) is arranged to select a number of the categories of content in response to the cognitive workload estimated, and to communicate content from the number of categories of content selected from the message for communication to the text-to-speech engine.

10. An apparatus as claimed in claim 9, wherein the extent of the selection of the number of categories of content depends upon the cognitive workload estimated.

11. An apparatus as claimed in claim 7 or 8, wherein the message comprises a field associated with a category of content of the categories of content.

12. An apparatus as claimed in any one of claims 5 to 11, wherein the message data module is arranged to embed the message or a part thereof with markup language code.

13. An apparatus as claimed in any one of claims 5 to 12, wherein the message is an e-mail message or a messaging service message.

14. A method of reducing driver workload in relation to operation of a mobile computing apparatus that supports receipt of textual content, the method comprising:
estimating a cognitive workload of a driver;
translating at least part of the received textual content to a signal reproducible as audible speech in accordance with a predetermined relationship between the amount of the textual content to be translated and a cognitive workload level in a range of cognitive workload levels, the range of cognitive workload levels comprising at least one cognitive workload level between end values.

15. A computer program element comprising computer program code means to make a computer execute the method as claimed in claim 14, optionally embodied on a computer readable medium.

## Patentansprüche

1. Mobile Computervorrichtung (200), Folgendes umfassend:
eine Rechnereinheit (202), die so gestaltet ist, dass sie bei Benutzung eine Betriebsumgebung unterstützt, wobei die Betriebsumgebung den Empfang von Textinhalt unterstützt;
einen Auslastungskalkulator (243), der so gestaltet ist, dass er eine kognitive Belastung eines Fahrers einschätzt; und
ein Schrift-Sprache-Gerät (242);
wobei das Schrift-Sprache-Gerät (242) so gestaltet ist, dass es mindestens einen Teil des erhaltenen Textinhalts in ein Signal wandelt, das gemäß einer vorher festgelegten Beziehung zwischen der Menge an zu übersetzendem Textinhalt und einem kognitiven Belastungsniveau aus einer Anzahl kognitiver Belastungsniveaus als hörbarer Text reproduziert werden kann, wobei die Anzahl der kognitiven Belastungsniveaus mindestens ein kognitives Belastungsniveau zwischen den Grenzwerten umfasst.

2. Vorrichtung nach Anspruch 1, darüber hinaus umfassend:
eine Eingabe, die funktionsbereit mit dem Auslastungskalkulator (243) verbunden ist, um ein Kriterium zu empfangen, das für die Erfassung der kognitiven Belastung des Fahrers verwendet wird.

3. Vorrichtung nach Anspruch 2, wobei das Kriterium mindestens eines der Folgenden ist: (i) Geschwindigkeit eines Fahrzeugs; (ii) Wetterbedingungen; (iii) Einschätzung eines physiologischen Zustands des Fahrers; (iv) ein Profil des Fahrers und (v) eine Beurteilung der Vertrautheit des Fahrers mit einem geografischen Gebiet.

4. Vorrichtung nach einem der vorherigen Ansprüche, wobei der ausgewählte Teil des Textinhalts einen Teil des darin enthaltenen Textinhalts umfasst, wobei der Umfang des ausgewählten Textinhaltes von dem Grad der geschätzten Belastung abhängt.

5. Vorrichtung nach einem der vorherigen Ansprüche, wobei die Betriebsumgebung so gestaltet ist, dass sie Folgendes unterstützt:
eine vorher festgelegte Primäranwendung (240), die so gestaltet ist, dass sie eine Nachricht mit Textinhalt empfängt; und
ein Nachrichtendatenmodul (250), das so gestaltet ist, dass es die hörbar zu kommunizierende Nachricht empfängt; wobei
das Nachrichtendatenmodul (250) so gestaltet ist, dass es einen Teil der Nachricht als Reaktion auf die geschätzte kognitive Belastung auswählt; und
das Nachrichtendatenmodul (250) ebenfalls so gestaltet ist, dass es dem Schrift-Sprache-Gerät (242) den Teil der ausgewählten Nachricht übermittelt.

6. Vorrichtung nach einem der Ansprüche 1 bis 5, wobei die Betriebsumgebung so gestaltet ist, dass sie Folgendes unterstützt:
eine vorher festgelegte Primäranwendung (240);
die Benutzerinstallation einer untergeordneten Nebenanwendung (241), die in der Lage ist, eine Nachricht mit Textinhalt zu empfangen; und
ein Nachrichtendatenmodul (250), das so gestaltet ist, dass es die hörbar zu kommunizierende Nachricht empfängt; wobei
das Nachrichtendatenmodul (250) so gestaltet ist, dass es einen Teil der Nachricht als Reaktion auf die geschätzte kognitive Belastung auswählt; und
das Nachrichtendatenmodul (250) ebenfalls so gestaltet ist, dass es dem Schrift-Sprache-Gerät (242) den Teil der ausgewählten Nachricht übermittelt.

7. Vorrichtung nach einem der vorherigen Ansprüche, wobei die Nachricht maschinenerkennbare Inhaltskategorien umfasst.

8. Vorrichtung nach Anspruch 7, wobei das Nachrichtendatenmodul (250) so gestaltet ist, dass es den Textinhalt analysiert und die Inhaltskategorien in der Nachricht erkennt.

9. Vorrichtung nach einem der Ansprüche 7 oder 8, wobei das Nachrichtendatenmodul (250) so gestaltet ist, dass es eine Reihe von Inhaltskategorien als Reaktion auf die geschätzte kognitive Belastung auswählt und Inhalt aus der Reihe von Inhaltskategorien des aus der Nachricht zur Weiterleitung an die Schrift-Sprache-Maschine ausgewählten Inhalts weiterleitet.

10. Vorrichtung nach Anspruch 9, wobei der Umfang der Auswahl der Reihe von Inhaltskategorien von der geschätzten kognitiven Belastung abhängt.

11. Vorrichtung nach Anspruch 7 oder 8, wobei die Nachricht einen Bereich umfasst, der mit einer Inhaltskategorie der Inhaltskategorien verbunden ist.

12. Vorrichtung nach einem der Ansprüche 5 bis 11, wobei das Nachrichtendatenmodul so gestaltet ist, dass die Nachricht oder ein Teil davon in einem Markup-Language-Code verankert.

13. Vorrichtung nach einem der Ansprüche 5 bis 12, wobei es sich bei der Nachricht um eine E-Mail-Nachricht oder um eine Messaging-Service-Nachricht handelt.

14. Verfahren zur Verringerung der Belastung des Fahrers in Bezug auf den Betrieb einer mobilen Computervorrichtung, die den Empfang von Textinhalt unterstützt, wobei das Verfahren Folgendes umfasst:
Einschätzen einer kognitiven Belastung eines Fahrers;
Umwandeln von mindestens einem Teil des empfangenen Textinhalts in ein Signal, das gemäß einer vorher festgelegten Beziehung zwischen der Menge an zu übersetzendem Textinhalt und einem kognitiven Belastungsniveau aus einer Anzahl kognitiver Belastungsniveaus als hörbarer Text reproduziert werden kann, wobei die Anzahl der kognitiven Belastungsniveaus mindestens ein kognitives Belastungsniveau zwischen den Grenzwerten umfasst.

15. Computerprogrammelement, umfassend Computerprogrammcodemittel, die einen Computer das Verfahren nach Anspruch 14 durchführen lassen, wobei das Computerprogramelement optional als Teil eines computerlesbaren Mediums ausgeführt ist.

## Revendications

1. Appareil de calcul mobile (200), comprenant :
une ressource de traitement (202) agencée pour prendre en charge, lorsqu'elle est en service, un environnement opérationnel, l'environnement opérationnel prenant en charge une réception d'un contenu textuel ;
un dispositif d'estimation de charge de travail (243) agencé pour estimer une charge de travail cognitive pour un conducteur ; et
un moteur de synthèse vocale (242) ;
dans lequel le moteur de synthèse vocale (242) est agencé pour traduire au moins une partie du contenu textuel reçu en un signal reproductible sous forme de voix audible selon une relation prédéterminée entre le volume du contenu textuel à traduire et un niveau de charge de travail cognitive dans une plage de niveaux de charge de travail cognitive, la plage de niveaux de charge de travail cognitive comprenant au moins un niveau de charge de travail cognitive entre des valeurs extrêmes.

2. Appareil selon la revendication 1, comprenant en outre :
une entrée couplée de manière opérationnelle au dispositif d'estimation de charge de travail (243) afin de recevoir un critère à utiliser afin de calculer la charge de travail cognitive du conducteur.

3. Appareil selon la revendication 2, dans lequel le critère est au moins un des éléments suivants : (i) la vitesse d'un véhicule ; (ii) des conditions météorologiques ; (iii) une estimation d'un état physiologique du conducteur ; (iv) un profil du conducteur ; et (v) une évaluation de la connaissance du conducteur en ce qui concerne une aire géographique.

4. Appareil selon l'une quelconque des revendications précédentes, dans lequel la partie sélectionnée du contenu textuel comprend une proportion du contenu textuel associé, l'étendue du contenu textuel sélectionné étant dépendante du degré de charge de travail estimée.

5. Appareil selon l'une quelconque des revendications précédentes, dans lequel l'environnement opérationnel est agencé pour prendre en charge :
une application primaire prédéterminée (240) agencée pour recevoir un message contenant le contenu textuel ; et
un module de données de message (250) agencé pour recevoir le message à communiquer de manière audible ;
dans lequel :
le module de données de message (250) est agencé pour sélectionner une partie du message en réponse à la charge de travail cognitive estimée ; et
le module de données de message (250) est également agencé pour communiquer la partie du message sélectionné au moteur de synthèse vocale (242).

6. Appareil selon l'une quelconque des revendications 1 à 5, dans lequel l'environnement opérationnel est agencé pour supporter :
une application primaire prédéterminée (240) ;
un installation d'utilisateur d'une application non centrale secondaire (241) qui est capable de recevoir un message contenant un contenu textuel ; et
un module de données de message (250) agencé pour recevoir le message à communiquer de manière audible ;
dans lequel :
le module de données de message (250) est agencé pour sélectionner une partie du message en réponse à la charge de travail cognitive estimée ; et
le module de données de message (250) est également agencé pour communiquer la partie du message sélectionnée au moteur de synthèse vocale (242).

7. Appareil selon l'une quelconque des revendications précédentes, dans lequel le message comprend des catégories de contenu reconnaissables par machine.

8. Appareil selon la revendication 7, dans lequel module de données de message (250) est agencé pour analyser le contenu textuel et pour identifier les catégories du contenu dans le message.

9. Appareil selon la revendication 7 ou 8, dans lequel le module de données de message (250) est agencé pour sélectionner un nombre de catégories de contenu en réponse à la charge de travail cognitive estimée et pour communiquer le contenu à partir du nombre de catégories de contenu sélectionné dans le message à des fins de communication au moteur de synthèse vocale.

10. Appareil selon la revendication 9, dans lequel l'étendue de la sélection du nombre de catégories de contenu dépend de la charge de travail cognitive estimée.

11. Appareil selon la revendication 7 ou 8, dans lequel le message comprend un champ associé à une catégorie de contenu parmi les catégories de contenu.

12. Appareil selon l'une quelconque des revendications 5 à 11, dans lequel le module de données de message est agencé pour intégrer un code de langage de balisage au message ou à une partie de celui-ci.

13. Appareil selon l'une quelconque des revendications 5 à 12, dans lequel le message est un message de courrier électronique ou un message de service de messagerie.

14. Procédé de réduction de charge de travail d'un conducteur en relation avec l'utilisation d'un appareil de calcul mobile qui prend en charge une réception d'un contenu textuel, le procédé comprenant :
l'estimation d'une charge de travail cognitive d'un conducteur ;
la traduction d'au moins une partie du contenu textuel reçu en un signal reproductible sous forme de voix audible selon une relation prédéterminée entre le volume du contenu textuel à traduire et un niveau de charge de travail cognitive dans une plage de niveaux de charge de travail cognitive, la plage de niveaux de charge de travail cognitive comprenant au moins un niveau de charge de travail cognitive entre des valeurs extrêmes.

15. Elément de programme d'ordinateur comprenant un moyen de code de programme pour faire en sorte qu'un ordinateur exécute le procédé selon la revendication 14, réalisé d'une manière facultative sur un support lisible par ordinateur.
